# EUROPÄISCHE PATENTSCHRIFT

(11) **EP 2 870 679 B1**
(45) Veröffentlichungstag und Bekanntmachung des Hinweises auf die Patenterteilung: **28.09.2016**
(21) Anmeldenummer: 13750324.9
(22) Anmeldetag: 15.08.2013
(51) Int. Cl.: H02K 1/18

(54) **STATOR MIT VON MANTELBLECH UMGEBENEM STATORBLECHPAKET**
STATOR COMPRISING A STATOR LAMINATE STACK SURROUNDED BY A JACKET PLATE
STATOR POURVU D'UN NOYAU FEUILLETÉ ENTOURÉ PAR UNE TÔLE D'ENVELOPPE

(30) Priorität: 28.08.2012 DE 102012215234
(43) Veröffentlichungstag der Anmeldung: 13.05.2015
(73) Patentinhaber: Siemens Aktiengesellschaft, 80333 München (DE)
(72) Erfinder: SCHALLER, Manfred, 92318 Neumarkt (DE); KAISER, Marcus, 90478 Nürnberg (DE); LANGE, Thomas, 90766 Fürth (DE); TOMAN, Heinz, 91126 Schwabach (DE)
(86) Internationale Anmeldenummer: PCT/EP2013/067071
(87) Internationale Veröffentlichungsnummer: WO 2014/032983

(56) Entgegenhaltungen:
- DE-A1- 10 039 074
- DE-C- 542 272
- DE-C1- 19 520 818

## Beschreibung

Die vorliegende Erfindung betrifft einen Stator einer elektrischen Maschine,
- wobei der Stator ein Statorblechpaket aufweist,
- wobei das Statorblechpaket sich in Richtung einer Symmetrieachse des Statorblechpakets gesehen von einer ersten axialen Stirnseite des Statorblechpakets zu einer zweiten axialen Stirnseite des Statorblechpakets erstreckt,
- wobei das Statorblechpaket auf seiner von der Symmetrieachse abgewandten Außenseite von einem Mantelblech umgeben ist,
- wobei das Mantelblech sich um die Symmetrieachse herum gesehen von einer ersten Stoßkante des Mantelblechs zu einer zweiten Stoßkante des Mantelblechs erstreckt,
- wobei die Stoßkanten sich in Richtung der Symmetrieachse gesehen zumindest von der ersten axialen Stirnseite zur zweiten axialen Stirnseite des Statorblechpakets erstrecken,
- wobei die Stoßkanten des Mantelblechs in Richtung der Symmetrieachse gesehen mittels einer durchgehenden Schweißnaht über ihre gesamte Länge miteinander verschweißt sind,
- wobei die Schweißnaht aufgrund ihrer thermischen Schrumpfung auf das Mantelblech eine Zugspannung ausübt.

Die vorliegende Erfindung betrifft weiterhin eine elektrische Maschine,
- wobei die elektrische Maschine einen Stator und einen Rotor aufweist,
- wobei der Rotor in Lagern gelagert ist, so dass er um eine Symmetrieachse des Stators rotierbar ist,
- wobei der Rotor in Richtung auf die Symmetrieachse zu gesehen zwischen dem Stator und der Symmetrieachse angeordnet ist.

Ein entsprechender Stator einer elektrischen Maschine und die entsprechende elektrische Maschine sind aus der DE 195 20 818 C1 bekannt. Bei der DE 195 20 818 C1 dient das Mantelblech insbesondere zur Zentrierung des Statorblechpakets relativ zur Symmetrieachse. Auf das Mantelblech sind axial beidseitig Pressringe aufgesetzt, wobei die Pressringe jeweils eine umlaufende Zentriernut aufweisen, in die das Mantelblech federnd eingebracht wird. Nach dem Verpressen des Statorblechpakets werden die Pressringe mit dem Mantelblech verschweißt. Die Konstruktion ist relativ aufwändig.

Ein Stator einer elektrischen Maschine und die entsprechende elektrische Maschine sind auch aus der DE 100 39 074 A1 bekannt. Bei der DE 100 39 074 A1 ist zwischen dem Mantelblech und dem Statorblechpaket im wesentlichen über den gesamten Umfang gesehen eine Ummantelung angeordnet. Im Bereich der Schweißnaht weist die Ummantelung eine Aussparung auf, so dass die Schweißnaht von der Ummantelung beabstandet ist. Um die Symmetrieachse des Statorblechpakets herum gesehen ist die Aussparung der Ummantelung breiter als die Schweißnaht. Aufgrund der Ummantelung gestaltet sich die Wärmeabfuhr von der elektrischen Maschine auf die Umgebung kompliziert.

Aus der DE 542 272 A ist eine elektrische Maschine bekannt, bei der das Statorblechpaket auf seiner von der Symmetrieachse abgewandten Außenseite von einem Mantelblech umgeben ist. Die Stoßkanten des Mantelblechs sind mit rechteckigen Ausschnitten und mit hakenartig umgebogenen Lappen versehen. Die Lappen liegen den Ausschnitten gegenüber. Zwischen die von den Lappen gebildeten Haken ist ein Flachkeil eingeschoben, durch den die Haken auseinander getrieben werden und das Mantelblech fest an das Statorblechpaket gepresst wird. Die axialen Enden des Mantelblechs können zusätzlich miteinander verschweißt sein.

Die Aufgabe der vorliegenden Erfindung besteht darin, eine elektrische Maschine zu schaffen, die einfach aufgebaut ist und leicht gekühlt werden kann.

Die Aufgabe wird durch einen Stator einer elektrischen Maschine mit den Merkmalen des Anspruchs 1 gelöst. Vorteilhafte Ausgestaltungen des erfindungsgemäßen Stators sind Gegenstand der abhängigen Ansprüche 2 bis 7.

Erfindungsgemäß wird die Aufgabe dadurch gelöst, dass ein Stator der eingangs genannten Art dadurch ausgestaltet wird,
- dass um die Symmetrieachse herum gesehen im Bereich der Schweißnaht und nur dort zwischen dem Mantelblech und dem Statorblechpaket ein Zwischenelement angeordnet ist und im übrigen Bereich das Mantelblech unmittelbar am Statorblechpaket anliegt und
- dass aufgrund der Zugspannung im Bereich des Zwischenelements die Schweißnaht in Richtung auf die Symmetrieachse zu an das Zwischenelement angedrückt ist und im übrigen Bereich das Mantelblech in Richtung auf die Symmetrieachse zu an das Statorblechpaket angedrückt ist.

In einer bevorzugten Ausgestaltung des Stators ist vorgesehen,
- dass das Statorblechpaket eine Vertiefung aufweist,
- dass das Zwischenelement in der Vertiefung angeordnet ist,
- dass die Außenseite des Statorblechpakets in dem an die Vertiefung angrenzenden Abschnitt des übrigen Bereichs von der Symmetrieachse einen Abstand aufweist und
- dass das Zwischenelement derart dimensioniert ist, dass seine von der Symmetrieachse abgewandte Seite stufenfrei an den übrigen Bereich angrenzt.

Durch diese Ausgestaltung kann insbesondere (um die Symmetrieachse herum gesehen) der Winkelbereich maximiert werden, in dem das Mantelblech unmittelbar am Statorblechpaket anliegt.

In einer weiter bevorzugten Ausgestaltung ist vorgesehen, dass das Zwischenelement die Vertiefung vollständig ausfüllt. Dadurch kann das Zwischenelement um die Symmetrieachse herum gesehen spielfrei in der Vertiefung gehalten werden.

In der Regel weist die Vertiefung einen Vertiefungsboden und Vertiefungswände auf. Vorzugsweise sind der Vertiefungsboden und die Vertiefungswände derart ausgestaltet, dass im Querschnitt quer zur Symmetrieachse gesehen entweder die Vertiefungswände parallel zu einer jeweiligen die Symmetrieachse schneidenden Radiallinie verlaufen oder der Vertiefungsboden und die Vertiefungswände einen Schwalbenschwanz bilden. Dadurch wird erreicht, dass das Zwischenelement in der Vertiefung unter Formschluss gehalten wird. Es ist daher möglich, ein zwischen dem Statorblechpaket und einem Rotor der elektrischen Maschine wirkendes Drehmoment über das Zwischenelement in das Mantelblech und von dort weiter in das Gehäuse der elektrischen Maschine abzuleiten.

In einer besonders bevorzugten Ausgestaltung ist das Zwischenelement in der Vertiefung unter Presssitz gehalten. Dadurch ist das Zwischenelement insbesondere bereits vor dem Verschweißen der Stoßkanten miteinander unverlierbar in der Vertiefung gehalten.

Vorzugsweise ist das Zwischenelement mit den Stoßkanten verschweißt. Dadurch ist auf besonders einfache Weise eine Drehmomenteinleitung vom Statorblechpaket über das Zwischenelement in das Mantelblech möglich.

Vorzugsweise besteht das Zwischenelement aus demselben Material wie das Mantelblech. Diese Ausgestaltung erleichtert insbesondere das Verschweißen des Zwischenelements mit den Stoßkanten des Mantelblechs.

In Bezug auf die elektrische Maschine wird die Aufgabe dadurch gelöst, dass bei einer elektrischen Maschine der eingangs genannten Art der Stator wie obenstehend erläutert ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine im Längsschnitt,
- FIG 2: einen Querschnitt durch die elektrische Maschine von FIG 1 längs einer Linie II-II in FIG 1,
- FIG 3: eine Draufsicht auf die elektrische Maschine von FIG 1 aus einer Richtung III-III in FIG 1,
- FIG 4 und 5: je einen Ausschnitt von FIG 2 in zwei zueinander alternativen Ausgestaltungen und
- FIG 6: ein Detail von FIG 4.

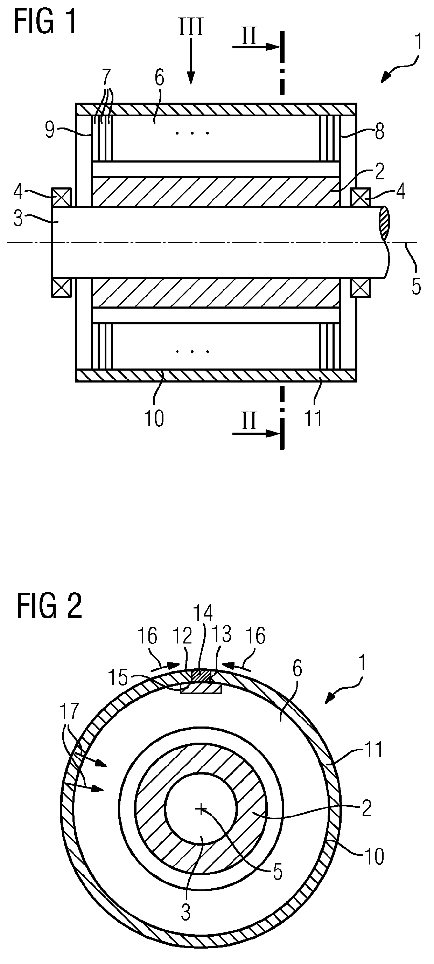

Gemäß FIG 1 weist eine elektrische Maschine einen Stator 1 und einen Rotor 2 auf. Der Rotor 2 umfasst eine Rotorwelle 3. Die Rotorwelle 3 ist in Lagern 4 gelagert. Dadurch ist der Rotor 2 um eine Symmetrieachse 5 der elektrischen Maschine rotierbar. Der Rotor 2 ist in Richtung auf die Symmetrieachse 5 zu gesehen zwischen dem Stator 1 und der Symmetrieachse 5 angeordnet.

Soweit nachfolgend die Begriffe "axial", "radial" und "tangential" verwendet werden, sind sie stets auf die Symmetrieachse 5 bezogen. Der Begriff "axial" bedeutet eine Richtung parallel zur Symmetrieachse 5. Der Begriff "radial" bedeutet eine Richtung orthogonal zur Symmetrieachse 5 auf die Symmetrieachse 5 zu oder von ihr weg. Der Begriff "tangential" bedeutet eine Richtung orthogonal zur Symmetrieachse 5 und orthogonal zur radialen Richtung, also in einem konstanten radialen Abstand von der Symmetrieachse 5 kreisförmig um die Symmetrieachse 5 herum.

Der Rotor 2 der elektrischen Maschine ist im Rahmen der vorliegenden Erfindung von untergeordneter Bedeutung. Nachfolgend wird daher nur der Aufbau des Stators 1 detailliert erläutert.

Gemäß FIG 1 weist der Stator 1 ein Statorblechpaket 6 auf. Das Statorblechpaket 6 besteht aus einzelnen Statorblechen 7, die axial aufeinander gestapelt sind, so dass das Statorblechpaket 6 sich in axialer Richtung gesehen von einer ersten axialen Stirnseite 8 zu einer zweiten axialen Stirnseite 9 des Statorblechpakets 6 erstreckt.

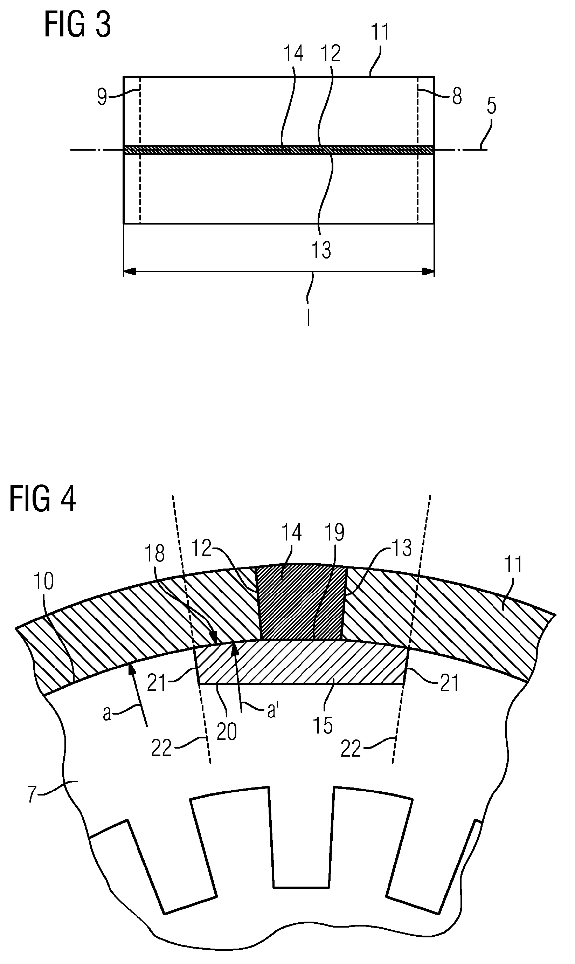

Das Statorblechpaket 6 weist eine von der Symmetrieachse 5 abgewandte Außenseite 10 auf. Auf der Außenseite 10 ist das Statorblechpaket 6 von einem Mantelblech 11 umgeben. Das Mantelblech 11 erstreckt sich - siehe insbesondere FIG 2 - tangential zur Symmetrieachse 5 gesehen von einer ersten Stoßkante 12 des Mantelblechs 11 zu einer zweiten Stoßkante 13 des Mantelblechs 11. Die Stoßkanten 12, 13 erstrecken sich - siehe insbesondere FIG 3 - in axialer Richtung gesehen zumindest von der ersten axialen Stirnseite 8 zur zweiten axialen Stirnseite 9 des Statorblechpakets 6. Gemäß FIG 3 erstrecken sich die Stoßkanten 12, 13 sogar über die axialen Stirnseiten 8, 9 hinaus. Die Stoßkanten 12, 13 des Mantelblechs 11 sind in axialer Richtung gesehen mittels einer durchgehenden Schweißnaht 14 über ihre gesamte Länge 1 miteinander verschweißt.

Gemäß den FIG 2, 4 und 5 ist tangential zur Symmetrieachse 5 gesehen im Bereich der Schweißnaht 14 ein Zwischenelement 15 angeordnet. Das Zwischenelement 15 ist jedoch tangential zur Symmetrieachse 5 gesehen nur im Bereich der Schweißnaht 14 angeordnet. Im übrigen Tangentialbereich ist kein Zwischenelement angeordnet. Hier liegt das Mantelblech 11 unmittelbar am Statorblechpaket 6 an.

Beim Herstellen des Stators 1 wird zunächst das Statorblechpaket 6 hergestellt. Sodann wird das Zwischenelement 15 am Statorblechpaket 6 befestigt. Auf mögliche Arten der Befestigung wird später näher eingegangen werden. Nach dem Befestigen des Zwischenelements 15 am Statorblechpaket 6 wird das Mantelblech 11 um das Statorblechpaket 6 gelegt, so dass das Mantelblech 11 am Statorblechpaket 6 anliegt und die Stoßkanten 12, 13 im Bereich des Zwischenelements 15 angeordnet sind. Sodann werden die Stoßkanten 12, 13 miteinander verschweißt, so dass sich die Schweißnaht 14 ausbildet.

Beim Schweißen werden die Stoßkanten 12, 13 (und ein etwaiges zusätzliches Material beispielsweise eines Schweißdrahtes) stark erhitzt. Nach dem Schweißen erfolgt eine Abkühlung und zusammen mit der Abkühlung eine thermische Schrumpfung der Schweißnaht 14. Aufgrund ihrer thermischen Schrumpfung übt die Schweißnaht 14 auf das Mantelblech 11 eine Zugspannung aus. Die Zugspannung wirkt in Tangentialrichtung. Sie ist in FIG 2 durch Pfeile 16 schematisch dargestellt. Die Zugspannung bewirkt tendenziell eine Verringerung des Umfangs des Mantelblechs 11. Da bereits vor der thermischen Schrumpfung das Mantelblech 11 am Statorblechpaket 6 angelegen hat, wird das Mantelblech 11 in radialer Richtung an das Statorblechpaket 6 angedrückt. Dies ist in FIG 2 durch Pfeile 17 schematisch dargestellt. Das radiale Andrücken des Mantelblechs 11 an das Statorblechpaket 6 erfolgt jedoch tangential zur Symmetrieachse 5 gesehen nicht im Bereich des Zwischenelements 15, sondern nur im übrigen Bereich. Im Bereich des Zwischenelements 15 wird aufgrund der Zugspannung die Schweißnaht 14 (und eventuell ein sehr kleiner Teil des Mantelblechs 11) an das Zwischenelement 15 radial angedrückt.

Prinzipiell ist es möglich, dass die Außenseite 10 des Statorblechpakets 6 gleichmäßig - insbesondere kreisförmig - von der Symmetrieachse 5 beabstandet ist. In diesem Fall verbleibt aufgrund der Dicke des Zwischenelements 15 - ähnlich wie bei einem medizinischen Druckverband - in Tangentialrichtung gesehen auf beiden Seiten des Zwischenelementes 15 ein kleiner Bereich, in dem das Mantelblech 11 von dem Statorblechpaket 6 beabstandet ist. Vorzugsweise weist das Statorblechpaket 6 jedoch entsprechend der Darstellung in den FIG 2, 4 und 5 eine Vertiefung 18 auf, in der das Zwischenelement 15 angeordnet ist. In diesem Fall weist die Außenseite 10 des Statorblechpaket 6 in dem an die Vertiefung 18 angrenzenden Abschnitt des übrigen Bereichs von der Symmetrieachse 5 einen Abstand a auf. Das Zwischenelement 15 ist in diesem Fall vorzugsweise derart dimensioniert, dass seine von der Symmetrieachse 5 abgewandte Seite 19 stufenfrei an den übrigen Bereich angrenzt. Ein Abstand a' der von der Symmetrieachse 5 abgewandten Seite 19 des Zwischenelements 15 von der Symmetrieachse 5 ist also gleich dem Abstand a der Außenseite 10.

Es ist möglich, dass das Zwischenelement 15 in Tangentialrichtung gesehen kleiner dimensioniert ist als die Vertiefung 18. Vorzugsweise füllt das Zwischenelement 15 die Vertiefung 18 jedoch vollständig aus. Dadurch wird insbesondere erreicht, dass das Zwischenelement 15 in der Vertiefung 18 in Tangentialrichtung spielfrei gehalten ist.

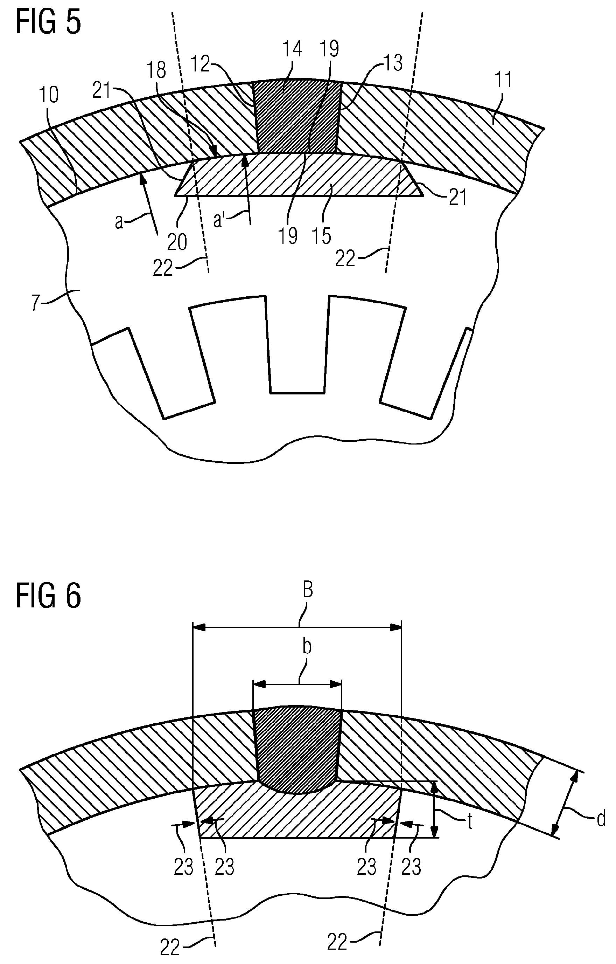

Die Vertiefung 18 weist gemäß den FIG 4 und 5 einen Vertiefungsboden 20 und Vertiefungswände 21 auf. Im Querschnitt quer zur Symmetrieachse 5 gesehen können die Vertiefungswände 21 entsprechend der Darstellung von FIG 4 parallel zu einer jeweiligen die Symmetrieachse 5 schneidenden Radiallinie 22 verlaufen. Alternativ können der Vertiefungsboden 20 und die Vertiefungswände 21 einen Schwalbenschwanz bilden. In diesem Fall verjüngt sich in Tangentialrichtung gesehen die Vertiefung 18 mit zunehmendem Abstand von der Symmetrieachse 5.

Es ist möglich, dass das Zwischenelement 15 passgenau auf die Vertiefung 18 abgestimmt ist. Vorzugsweise ist das Zwischenelement 15 in der Vertiefung 18 jedoch unter Presssitz gehalten, so dass in Tangentialrichtung gesehen das Zwischenelement 15 auf das Statorblechpaket 6 ausübt und umgekehrt das Statorblechpaket 6 auf das Zwischenelement 15 Druckkräfte ausübt. Dies ist in FIG 6 durch entsprechende Pfeile 23 schematisch dargestellt.

Es ist möglich, dass das Zwischenelement 15 mit dem Mantelblech 11 nicht verbunden ist. Vorzugsweise ist das Zwischenelement 15 entsprechend der Darstellung in FIG 6 jedoch mit den Stoßkanten 12, 13 verschweißt. Insbesondere kann das Zwischenelement 15 zu diesem Zweck aus demselben Material bestehen wie das Mantelblech 11.

Die Ausgestaltungen gemäß FIG 6 sind selbstverständlich auch in Verbindung mit einer Schwalbenschwanzform der Vertiefung 18 möglich.

Die Dimensionierung des Mantelblechs 11, der Schweißnaht 14, des Zwischenelements 15 und der Vertiefung 18 können nach Bedarf gewählt und aufeinander abgestimmt sein. Beispielsweise kann das Mantelblech 11 eine Dicke d aufweisen, die zwischen 0,1 mm und 3,0 mm liegt. Die Schweißnaht 14 kann eine Breite b aufweisen, die zwischen 1 mm und 10 mm liegt, insbesondere zwischen 1 mm und 7 mm. Das Zwischenelement 15 sollte eine Breite B aufweisen, die mindestens so groß wie die Breite b der Schweißnaht 14 ist. Vorzugsweise ist die Breite B des Zwischenelements 15 nur geringfügig größer als die Breite b der Schweißnaht 14, insbesondere ca. 2 mm bis 10 mm größer. Die Vertiefung 18 kann in radialer Richtung eine größere oder eine kleinere Tiefe t aufweisen. Je nach Lage des Einzelfalles kann die Tiefe t nur 0,6 mm betragen. Vorzugsweise beträgt die Tiefe t mindestens 1,0 mm. Sie kann jedoch auch größer sein. In Einzelfällen können Werte bis zu 5 mm oder sogar bis zu 10 mm sinnvoll sein.

Die vorliegende Erfindung weist viele Vorteile auf. Insbesondere kann mittels des Mantelblechs 11 auf einfache Weise ein flüssigkeitsdichter Abschluss um das Statorblechpaket 6 erreicht werden, so dass radial außerhalb des Mantelblechs 11 eine Flüssigkeitskühlung der elektrischen Maschine erfolgen kann. Durch die Verwendung eines relativ dünnen Mantelblechs 11 (Dicke d maximal 3,0 mm) und das Andrücken des Mantelblechs 11 an das Statorblechpaket 6 kann dennoch ein sehr geringer Wärmeübergangswiderstand erreicht werden. Durch das Zwischenelement 15 wird erreicht, dass beim Verschweißen der Stoßkanten 12, 13 ein Ausgasen des Statorblechpakets 6 vermieden wird. Durch die Anordnung des Zwischenelements 15 in der Vertiefung 18 kann die Kontaktfläche des Mantelblechs 11 mit dem Statorblechpaket 6 maximiert werden. Aufgrund der Ausgestaltung der Vertiefung 18 - Stichwort Vertiefungsboden 20 und Vertiefungswände 21 - in Verbindung mit dem vollständigen Ausfüllen der Vertiefung 18 durch das Zwischenelement 15 kann in Verbindung mit dem Verschweißen des Zwischenelements 15 mit den Stoßkanten 12, 13 ein auf den Stator 1 wirkendes Drehmoment auf einfache Weise in das Mantelblech 11 und von dort ein Gehäuse der elektrischen Maschine eingeleitet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Stator einer elektrischen Maschine,
- wobei der Stator ein Statorblechpaket (6) aufweist,
- wobei das Statorblechpaket (6) sich in Richtung einer Symmetrieachse (5) des Statorblechpakets (6) gesehen von einer ersten axialen Stirnseite (8) des Statorblechpakets (6) zu einer zweiten axialen Stirnseite (9) des Statorblechpakets (6) erstreckt,
- wobei das Statorblechpaket (6) auf seiner von der Symmetrieachse (5) abgewandten Außenseite (10) von einem Mantelblech (11) umgeben ist,
- wobei das Mantelblech (11) sich um die Symmetrieachse (5) herum gesehen von einer ersten Stoßkante (12) des Mantelblechs (11) zu einer zweiten Stoßkante (13) des Mantelblechs (11) erstreckt,
- wobei die Stoßkanten (12,13) sich in Richtung der Symmetrieachse (5) gesehen zumindest von der ersten axialen Stirnseite (8) zur zweiten axialen Stirnseite (9) des Statorblechpakets (6) erstrecken,
- wobei die Stoßkanten (12,13) des Mantelblechs (11) in Richtung der Symmetrieachse (5) gesehen mittels einer durchgehenden Schweißnaht (14) über ihre gesamte Länge (l) miteinander verschweißt sind,
- wobei die Schweißnaht (14) aufgrund ihrer thermischen Schrumpfung auf das Mantelblech (11) eine Zugspannung ausübt,
- **gekennzeichnet dadurch, dass** um die Symmetrieachse (5) herum gesehen im Bereich der Schweißnaht (14) und nur dort zwischen dem Mantelblech (11) und dem Statorblechpaket (6) ein Zwischenelement (15) angeordnet ist und im übrigen Bereich das Mantelblech (11) unmittelbar am Statorblechpaket (6) anliegt und
- dass aufgrund der Zugspannung im Bereich des Zwischenelements (15) die Schweißnaht (14) in Richtung auf die Symmetrieachse (5) zu an das Zwischenelement (15) angedrückt ist und im übrigen Bereich das Mantelblech (11) in Richtung auf die Symmetrieachse (5) zu an das Statorblechpaket (6) angedrückt ist.

2. Stator nach Anspruch 1, **dadurch gekenn**- **zeichnet**,
- dass das Statorblechpaket (6) eine Vertiefung (18) aufweist,
- dass das Zwischenelement (15) in der Vertiefung (18) angeordnet ist,
- dass die Außenseite (10) des Statorblechpakets (6) in dem an die Vertiefung (18) angrenzenden Abschnitt des übrigen Bereichs von der Symmetrieachse (5) einen Abstand (a) aufweist und
- dass das Zwischenelement (15) derart dimensioniert ist, dass seine von der Symmetrieachse (5) abgewandte Seite (19) stufenfrei an den übrigen Bereich angrenzt.

3. Stator nach Anspruch 2, **dadurch gekenn** - **zeichnet**, dass das Zwischenelement (15) die Vertiefung (18) vollständig ausfüllt.

4. Stator nach Anspruch 2 oder 3, **dadurch ge** - **kennzeichnet**, dass die Vertiefung einen Vertiefungsboden (20) und Vertiefungswände (21) aufweist und dass im Querschnitt quer zur Symmetrieachse (5) gesehen entweder die Vertiefungswände (21) parallel zu einer jeweiligen die Symmetrieachse (5) schneidenden Radiallinie (22) verlaufen oder der Vertiefungsboden (20) und die Vertiefungswände (21) einen Schwalbenschwanz bilden.

5. Stator nach Anspruch 4, **dadurch gekenn** - **zeichnet**, dass das Zwischenelement (15) in der Vertiefung (18) unter Presssitz gehalten ist.

6. Stator nach einem der obigen Ansprüche, **dadurch gekennzeichnet , dass** das Zwischenelement (15) mit den Stoßkanten (12, 13) verschweißt ist.

7. Stator nach einem der obigen Ansprüche, **dadurch gekennzeichnet, dass** das Zwischenelement (15) aus dem selben Material besteht wie das Mantelblech (11).

8. Elektrische Maschine,
- wobei die elektrische Maschine einen Stator (1) nach einem der obigen Ansprüche aufweist,
- wobei die elektrische Maschine einen Rotor (2) aufweist,
- wobei der Rotor in Lagern (4) gelagert ist, so dass er um die Symmetrieachse (5) rotierbar ist,
- wobei der Rotor (2) in Richtung auf die Symmetrieachse (5) zu gesehen zwischen dem Stator (1) und der Symmetrieachse (5) angeordnet ist.

## Claims

1. Stator of an electric machine,
- wherein the stator has a stator laminate stack (6),
- wherein the stator laminate stack (6) extends, when viewed in the direction of an axis of symmetry (5) of the stator laminate stack (6), from a first axial end side (8) of the stator laminate stack (6) to a second axial end side (9) of the stator laminate stack (6),
- wherein the stator laminate stack (6) is surrounded on its outer side (10) facing away from the axis of symmetry (5) by a jacket plate (11),
- wherein the jacket plate (11) extends, when viewed around the axis of symmetry (5), from a first abutment edge (12) of the jacket plate (11) to a second abutment edge (13) of the jacket plate (11),
- wherein the abutment edges (12, 13) extend, when viewed in the direction of the axis of symmetry (5), at least from the first axial end side (8) to the second axial end side (9) of the stator laminate stack (6),
- wherein the abutment edges (12, 13) of the jacket plate (11), when viewed in the direction of the axis of symmetry (5), are welded to one another by means of a continuous weld seam (14) over their entire length (1),
- wherein the weld seam (14), owing to its thermal shrinkage, exerts a tensile stress on the jacket plate (11),
- **characterised in that** when viewed around the axis of symmetry (5) an intermediate element (15) is arranged in the region of the weld seam (14) and only there between the jacket plate (11) and the stator laminate stack (6), and in the remaining region the jacket plate (11) rests directly on the stator laminate stack (6) and
- that owing to the tensile stress, in the region of the intermediate element (15) the weld seam (14) is pressed in the direction of the axis of symmetry (5) onto the intermediate element (15) and, in the remaining region, the jacket plate (11) is pressed in the direction of the axis of symmetry (5) onto the stator laminate stack (6).

2. Stator according to claim 1, **characterised in that**
- the stator laminate stack (6) has a recess (18),
- the intermediate element (15) is arranged in the recess (18),
- the outer side (10) of the stator laminate stack (6) has a distance (a) from the axis of symmetry (5) in the section of the remaining region adjoining the recess (18) and
- the intermediate element (15) is dimensioned such that its side (19) facing away from the axis of symmetry (5) adjoins the remaining region step-free.

3. Stator according to claim 2, **characterised in that** the intermediate element (15) completely fills the recess (18).

4. Stator according to claim 2 or 3, **characterised in that** the recess has a recess base (20) and recess walls (21) and that when viewed in cross-section transverse to the axis of symmetry (5), either the recess walls (21) run parallel to a respective radial line (22) intersecting the axis of symmetry (5) or the recess base (20) and the recess walls (21) form a dovetail.

5. Stator according to claim 4, **characterised in that** the intermediate element (15) is held in the recess (18) by press fit.

6. Stator according to one of the above claims, **characterised in that** the intermediate element (15) is welded to the abutment edges (12, 13).

7. Stator according to one of the above claims, **characterised in that** the intermediate element (15) consists of the same material as the jacket plate (11).

8. Electric machine,
- wherein the electric machine has a stator (1) according to one of the above claims,
- wherein the electric machine has a rotor (2),
- wherein the rotor is mounted in bearings (4) so that it can rotate about the axis of symmetry (5),
- wherein the rotor (2) is arranged, when viewed in the direction of the axis of symmetry (5), between the stator (1) and the axis of symmetry (5).

## Revendications

1. Stator d'une machine électrique,
- dans lequel le stator a un paquet ( 6 ) de tôles statoriques,
- dans lequel le paquet ( 6 ) de tôles statoriques s'étend, considéré dans la direction d'un axe ( 5 ) de symétrie du paquet ( 6 ) de tôles statoriques, d'un premier côté ( 8 ) frontal axial du paquet ( 6 ) de tôles statoriques à un deuxième côté ( 9 ) frontal axial du paquet ( 6 ) de tôles statoriques,
- dans lequel le paquet ( 6 ) de tôles statoriques est entouré sur son côté ( 10 ) extérieur, éloigné de l'axe ( 5 ) de symétrie, d'une tôle ( 11 ) d'enveloppe,
- dans lequel la tôle ( 11 ) d'enveloppe, considérée autour de l'axe ( 5 ) de symétrie, s'étend d'un premier bord ( 12 ) d'about de la tôle ( 11 ) d'enveloppe à un deuxième bord ( 13 ) d'about de la tôle ( 11 ) d'enveloppe,
- dans lequel les bords ( 12, 13 ) d'about s'étendent, considérés dans la direction de l'axe ( 5 ) de symétrie, du premier côté ( 8 ) frontal axial au deuxième côté ( 9 ) frontal axial du paquet ( 6 ) de tôles statoriques,
- dans lequel les bords ( 12, 13 ) d'about de la tôle ( 11 ) d'enveloppe sont, considérés dans la direction de l'axe ( 5 ) de symétrie, soudés entre eux sur toute leur longueur ( 1 ) à l'aide d'un cordon ( 14 ) de soudure continue,
- dans lequel le cordon ( 14 ) de soudure applique, en raison de son retrait thermique, une contrainte de traction à la tôle ( 11 ) d'enveloppe,
- **caractérisé en ce que**,
considéré autour de l'axe ( 5 ) de symétrie, dans la région du cordon ( 14 ) de soudure et seulement entre la tôle ( 11 ) d'enveloppe et le paquet ( 6 ) de tôles statoriques est monté un élément ( 15 ) intermédiaire et, dans la région restante, la tôle ( 11 ) d'enveloppe s'applique directement au paquet ( 6 ) de tôles statoriques et
- **en ce qu'**en raison de la contrainte de traction dans la région de l'élément ( 15 ) intermédiaire, le cordon ( 14 ) de soudure est appliqué à l'élément ( 15 ) intermédiaire en direction de l'axe ( 5 ) de symétrie et, dans la région restante, la tôle ( 11 ) d'enveloppe est appliquée au paquet ( 6 ) de tôles statoriques dans la direction allant vers l'axe ( 5 ) de symétrie.

2. Stator suivant la revendication 1, **caractérisé**
- **en ce que** le paquet ( 6 ) de tôles statoriques a une cavité ( 18 ),
- **en ce que** l'élément ( 15 ) intermédiaire est disposé dans la cavité ( 18 ),
- **en ce que** le côté ( 10 ) extérieur du paquet ( 6 ) de tôles statoriques a, dans la partie voisine de la cavité ( 18 ) de la région restante, une distance ( a ) à l'axe ( 5 ) de symétrie et
- **en ce que** l'élément ( 15 ) intermédiaire a des dimensions telles que son côté ( 19 ) éloigné de l'axe ( 5 ) de symétrie, est contigu sans degré de continuité à la région restante.

3. Stator suivant la revendication 2, **caractérisé en ce que** l'élément ( 15 ) intermédiaire remplit complètement la cavité ( 18 ).

4. Stator suivant la revendication 2 ou 3, **caractérisé en ce que** la cavité a un fond ( 20 ) de cavité et des parois ( 21 ) de cavité et **en ce que**, en section transversale, considérée transversalement à l'axe ( 5 ) de symétrie, ou bien les parois ( 21 ) de la cavité sont parallèles à une ligne ( 22 ) radiale coupant l'axe ( 5 ) de symétrie, ou bien le fond ( 20 ) de la cavité et les parois ( 21 ) de la cavité forment une queue d'aronde.

5. Stator suivant la revendication 4, **caractérisé en ce que** l'élément ( 15 ) intermédiaire est maintenu à ajustement avec serrage dans la cavité ( 18 ).

6. Stator suivant l'une des revendications précédentes, **caractérisé en ce que** l'élément ( 15 ) intermédiaire est soudé aux bords ( 12, 13 ) d'about.

7. Stator suivant l'une des revendications précédentes, **caractérisé en ce que** l'élément ( 15 ) intermédiaire est en le même matériau que la tôle d'enveloppe.

8. Machine électrique
- dans laquelle la machine électrique a un stator ( 1 ) suivant l'une des revendications précédentes,
- dans laquelle la machine électrique a un rotor ( 2 ),
- dans laquelle le rotor est monté dans des paliers ( 4 ) de manière à pouvoir tourner autour de l'axe ( 5 ) de symétrie,
- dans laquelle le rotor ( 2 ) est, considéré dans la direction allant vers l'axe ( 5 ) de symétrie, disposé entre le stator ( 1 ) et l'axe ( 5 ) de symétrie.
